# EUROPEAN PATENT APPLICATION

(11) **EP 2 975 556 A1**
(43) Date of publication of application: **20.01.2016**
(21) Application number: 14177617.9
(22) Date of filing: 18.07.2014
(51) Int. Cl.: G06K 19/06, G06K 7/10

(54) **System and method for identifying and authenticating ammunition**

(71) Applicant: NISS Group SA, 1260 Nyon (CH)
(72) Inventor: Pache, Christophe, 1185 Mont-sur-Rolle (CH); Liu, Hua, Carlingford, NSW 2118 (AU); Chen, Yong, Marsfield, NSW 2122 (AU); McGregor, Tom, West Ryde, NSW 2114 (AU); Ganjekar, Sayee, Dundas Valley, NSW 2117 (AU)
(74) Representative: reuteler & cie SA

(57) **Abstract**

Ammunition round comprising a case (2) and identification information on said case, wherein said identification information includes a tag (101) comprising an luminescent material (7, 7a) positioned on a base wall (8) of said case (2), the luminescent material comprising a luminescent material that up-converts or down-converts an excitation light, configured to produce a spectral signature allowing authentication of the tag.

## Description

### FIELD OF THE INVENTION

The invention relates to a system and method for identifying and authenticating products, in particular ammunition, and to ammunition carrying identification and authentication information.

### BACKGROUND OF THE INVENTION

Conventional marking of ammunition is simple and typically does not provide each cartridge with a unique serial number, thus lacking security against counterfeit. Most manufacturers stamp a mark onto the back of each cartridge indicating the manufacturer name and the LOT number. This way of tagging the ammunition is very economical as it can be directly implemented in the production process (stamping process), however it provides little protection against counterfeits and does not enable the origin of the cartridge to be reliably traced, if at all.

There would be an advantage in various civil and military applications for unique, positive and reliable identification of ammunition, for instance for law enforcement, for inventory controlling and for transfer and use of ammunition. Traceability before and after shooting of the cartridge would enable fast forensic identification for cartridge or projectile. Law enforcement sector will strongly benefit from such an application. Secure and reliable marking of ammunition is crucial in the fight against the proliferation of illicit trade.

In the field of firearms and ammunition, marking of ammunition can be separated into three components: the case, the projectile and the primer. These three parts are typically manufactured independently and assembled together during the charging of the cartridge. Any of these three parts could be marked independently or the assembly could be marked as a whole.

As explained above, the conventional marking of ammunition is rather simple and neither allows an accurate traceability of products nor provides security against counterfeits. However, in many other fields of the industry, the positive identification of products, their tracking and authentication are already applied and continuously developed and improved. Security markings of various degrees of complexity exist and are applied on items and products helping to answer the question whether a given product is genuine or counterfeit. Counterfeiting indeed is a worldwide problem resulting in huge economic losses and negatively impacting consumers and producers. To counteract this problem, anti-counterfeiting technology is constantly being developed including new security markings and adapted readers. Such security marking may have both spatial and spectral coding components; however such technology is not presently being used for ammunition.

WO2010012046 generally describes a code carrier having fluorescent markings. It mentions a reader engineered for reading a fluorescent code carrier in which the recorded information is encoded into visual features of a coded visual marking. This reader apparatus may include a combination of two reading apparatuses, one that reads the fluorescent properties of the fluorescent material in the coded fluorescent marking and the other which reads the visual features of the coded fluorescent marking. In this document, the fluorescent signal is read and decoded first and the visual shape properties are subsequently decoded.

US7441704 describes a system and method for identifying a spatial code having one or multi-dimensional pattern applied to an object, where the spatial code includes a plurality of security tags or compositions having one or more characteristic emission spectral signatures. The system uses beam source to illuminate the code, a spectrometer to analyse its signature and a camera to identify the code. It also comprises a beam splitter for splitting the emitted light from the code to both an image detector and an optical spectrometer which induces a simultaneous acquisition of the information/data.

US7938331 describes a reader to authenticate a tag/marking/code (an automatic identification symbol e.g. a barcode) applied to an item and having specific spectral emission signatures. The specific spectral signature of the tag/code is applied in addition elsewhere on the item. If both spectral signatures are recognized and both match, the product validation is performed without accessing an external database. The system uses an illumination light to excite the fluorescent tag, a spectrometer to analyse its signature and a camera to identify the code.

All the above-mentioned systems use the spectral properties of a tag having a code carrier structure. The use of a spectrometer in addition to a camera offers the highest accuracy and thus, guarantees a high level security. However, even if certain systems make use of these two detectors, they do not allow a fully independent setting of their acquisition parameters such as integration time and excitation light intensity. Moreover, none of the above-mentioned methods fully benefits from the information available in the camera images as they do not analyse their spectral characteristics prior to analysing the information recorded by the spectrometer.

The above mentioned methods for product marking have not been implemented in ammunition which is subject to a harsh environment that may damage conventional tags. Also, in view of the high volume manufacturing and relatively low manufacturing cost on many items of ammunition, costs of currently available sophisticated identification and authentication technology are considered a barrier to implementation of such technologies in ammunition production.

### SUMMARY OF THE INVENTION

An object of this invention is to provide a system and method for uniquely identifying and authenticating items subject to harsh environments, in particular ammunition, in a cost effective and reliable manner.

It would be advantageous to provide a system and method for uniquely identifying and authenticating ammunition that allows reliable identification and authentication of components of the ammunition, for instance the cartridge case, the projectile or both, after use.

It would be advantageous to provide a system and method for uniquely identifying and authenticating ammunition that provides a high level of security against counterfeit.

It would be advantageous to provide a system and method for uniquely identifying and authenticating ammunition that that is easily portable for field use.

It would be advantageous to provide a system and method for uniquely marking, identifying and authenticating ammunition that is rapid and that may be easily integrated in a conventional manufacturing line.

Objects of the invention have been achieved by providing an ammunition round according to claim 1.

Objects of the invention have been achieved by providing a method of manufacturing an ammunition round according to claim 22.

Objects of the invention have been achieved by providing a system for identifying and authenticating a tag applied to an ammunition round according to claim 26.

Objects of the invention have been achieved by providing a method for identifying and authenticating a tag applied to an ammunition round according to claim 33.

Objects of the invention have been achieved by providing a method for identifying and authenticating a tag applied to an ammunition round according to claim 40.

Disclosed herein is an ammunition round comprising a case and identification information on said case, wherein said identification information includes a tag comprising a luminescent material positioned on a base wall of said case, the luminescent material that up-converts or down-converts an excitation light, configured to produce a spectral signature allowing authentication of the tag.

In an embodiment, the tag is placed on the projectile or on both the case and the projectile.

In an embodiment, the tag comprises a plurality of dots of luminescent material forming a spatial pattern defining at least in part an identification code.

In an embodiment, the luminescent material comprises luminescent particles embedded or held together in a binder or matrix material, for instance an epoxy or other polymeric material.

In an embodiment, the luminescent particles are preferably up-converting particles with a diameter typically comprised in the micrometer, sub-micrometer or nanometer range.

In an embodiment, the excitation light is in the infrared range (from 800 to 2000 nm, typically 980 nm).

In an embodiment, the ammunition round comprises a projectile closing off an open end of the case, a combustible material contained in the case, and a primer or detonator mounted at a centre portion of the base wall that is configured to be hit by a firing pin of a weapon.

In an embodiment, the luminescent material is mounted in a recess or plurality of recesses in the case base wall.

In an embodiment, the recess or recesses comprise a groove formed in the case base wall, and dots of luminescent material forming the tag are positioned within the groove.

In an embodiment, the groove is a continuous groove.

In an embodiment, the continuous groove is circular.

In an embodiment, said recess or recesses are positioned adjacent the periphery of the case base wall.

In an embodiment, said recess or recesses are formed in a stamping operation of said case base wall.

In an embodiment, said tag comprises an orientation mark or pattern that allows a spatial arrangement of luminescent material to be oriented so that an identification code defined by the spatial pattern of the tag can be unambiguously read and identified.

In an embodiment, the luminescent material dots define a binary code.

In an embodiment, the luminescent material dots define a code comprising a plurality of values greater than binary values, by the use of different types of luminescent materials emitting different spectra.

In an embodiment, the ammunition case or projectile further comprises a transparent protective layer placed on top of the luminescent material.

In an embodiment, the protective layer is of various types provided that it is not opaque to the range of wavelengths of the excitation light and the light emitted by the luminescent material, preferred materials including polymer materials.

In an embodiment, the ammunition round further comprises luminescent material incorporated in a varnish layer on the case base wall, or in a sacrificial dot forming part of the tag on or close to a primer of the ammunition round, configured to detect that the case has been used and reloaded.

Also disclosed herein is a method of manufacturing an ammunition round, comprising stamping a recess or recesses in the case base wall during the case stamping operation and depositing dots of luminescent material in said recess or recesses.

In an embodiment, the recess is created by other means such as laser engraving, micro-machining or etching.

In an embodiment, the dots of luminescent material are deposited using a printing dispenser.

In an embodiment, prior to packaging the ammunition rounds, each tag is identified by a reader and registered in an inventory management system.

Also disclosed herein is a system for identifying and authenticating a tag applied to an ammunition round, wherein the tag is defined by at least one luminescent spatial pattern and one spectral signature of luminescent particles contained in said tag and defining said spatial pattern. The system comprises:
▪ a reading module to acquire the tag information, said reading module comprising: a lighting unit comprising a light source driven in a pulse-mode, said light source being adapted to illuminate the tag with excitation light so as to excite the luminescent particles of the tag, thus resulting in the emission of the luminescent spatial pattern by the tag; an imaging unit adapted to record an image of said spatial pattern; a spectral unit adapted to record the spectrum of said spectral signature; a timing control unit adapted to synchronize the actions of the other units of the reading module; and
▪ a processing module both in communication with the reading module and with a database containing the spatial patterns and spectral signatures of predetermined tags, said processing module comprising: a decoding unit adapted to decode the image recorded by the imaging unit, provide a serial number corresponding to said image and compare said serial number with the corresponding serial numbers of the predetermined tags so as to identify the tag; a validation unit adapted to compare the spectrum recorded by the spectral unit with the spectra of the predetermined tags so as to authenticate the tag, and a read-out unit to disclose information about the tag once authenticated.

The imaging unit and the spectral unit may advantageously record their respective signals in a sequential manner, their acquisition being synchronized with different excitation light pulses.

In an embodiment, a first and a second excitation light pulses are used.

In an embodiment, the acquisition of the imaging unit is synchronized with the first excitation light pulse and the acquisition of the spectral unit is synchronized with the second pulse.

In an embodiment, the imaging unit records a signal image and a background image and the spectral unit records a signal spectrum and background spectrum.

In an embodiment, the decoding unit performs the identification of the tag using the image resulting from the subtraction of the background image to the signal image and the spectral unit performs the validation of the tag using the spectrum resulting from the subtraction of the background spectrum to the signal spectrum.

In an embodiment, the system further comprises a global positioning unit and a localization unit.

Also disclosed herein is a method for identifying and authenticating a tag applied to an ammunition round, wherein the tag is defined by at least one luminescent spatial pattern and the one spectral signature of luminescent particles contained in said tag and defining said spatial pattern, comprising the steps of: illuminating the tag with excitation light emitted by a light source driven in a pulse-mode so as to excite the luminescent particles of the tag, thus resulting in the emission of the luminescent spatial pattern by the tag; recording with an imaging unit an image of said spatial pattern; recording with a spectral unit a spectrum of said spectral signature; decoding with a decoding unit said image so as to identify the tag; and validating with a validation unit said spectrum so as to authenticate the tag.

The imaging unit and the spectral unit may advantageously record their respective signals in a sequential manner, their acquisition being synchronized with different excitation light pulses.

In an embodiment, a first and a second excitation light pulses are used.

In an embodiment, the acquisition of the imaging unit is synchronized with the first excitation light pulse and the acquisition of the spectral unit is synchronized with the second excitation light pulse.

In an embodiment, the imaging unit records a signal image and a background image and the spectral unit records a signal spectrum and background spectrum.

In an embodiment, the decoding unit performs the identification of the tag using the image resulting from the subtraction of the background image to the signal image and the spectral unit performs the validation of the tag using the spectrum resulting from the subtraction of the background spectrum to the signal spectrum.

In an embodiment, the method further comprises a step of determining the exact position of the tag.

Also disclosed herein is a method for identifying and authenticating a tag applied to an ammunition round, wherein the tag is defined by at least one luminescent spatial pattern and one spectral signature of luminescent particles contained in said tag and defining said spatial pattern, comprising the steps of : illuminating the tag with an excitation light emitted by a light source driven in a pulse-mode so as to excite the particles of the tag, thus resulting in the emission of the luminescent spatial pattern by the tag; recording with an imaging unit a signal image and a background image of said spatial pattern; subtracting the background image to the signal image so as to determine an image of said spatial pattern; recording with a spectral unit a signal spectrum and a background spectrum, of said spectral signature; subtracting the background spectrum to the signal spectrum so as to determine a spectrum of said spectral signature; decoding with a decoding unit said images, so as to identify the tag, and validating with a validation unit said image and the spectrum, by decomposing said image into different colour components and comparing the intensity ratios between said colour components with the information stored in the database, and comparing said spectrum to the signal spectrum to the spectra stored in the database.

In an embodiment, the decoding unit performs a pre-validation step consisting in checking the presence of the spatial pattern on the image resulting from the subtraction of the background image from the signal image.

In an embodiment, the validation unit performs a first validation level using the information recorded by the imaging unit by decomposing the image of the tag into three colour components and analysing their ratios.

In an embodiment, the validation unit performs a second and third validation levels using the information recorded by the spectral unit by analysing the peak intensities at certain wavelengths and the ratios between these values.

In an embodiment, the validation unit performs a further step of calculating the fluorescence lifetime of the luminescent particles.

Further advantageous aspects and features of the invention will be apparent from the detailed description and figures.

### BRIEF DESCRIPTION OF THE DRAWINGS

**Figure 1** illustrates a tag and a reading module of a system according to a first embodiment of the present invention;
**Figure 2** schematically illustrates a cross-section of an object marked with several types of luminescent particles embedded into the object according to embodiments of the invention;
**Figure 3** illustrates examples of spatial patterns of tags that may be read by a system according to embodiments of the invention;
**Figure 4** represents a block diagram illustrating a system according to a first embodiment of the present invention;
**Figure 5** is a time-diagram illustrating a synchronization pattern of a reading module used in a system according to embodiments of the present invention;
**Figure 6** depicts a flow-chart of an exemplary method performed by the system of Figure 1;
**Figure 7** represents a block diagram illustrating a system according to a second embodiment of the present invention;
**Figure 8** is a graph illustrating an example of a spectrum of a tag acquired with a reading module of a system, after background subtraction, according to an embodiment of the invention;
**Figures 9A, 9B, 9C** are schematic illustrations of an example of an ammunition round comprising a marked case according to an embodiment of the invention, figure 9a showing a base wall, figure 9b a cross-section of part of the round through line B-B of figure 9a, and figure 9c showing a side of the ammunition round;
**Figures 10A** and **10B** schematically depict a modified stamping tool for stamping a cartridge base wall according to an embodiment of the invention, figure 10a showing a view of the stamping surface and figure 10b a cross-section through line B-B of figure 10a;
**Figure 11** illustrates a flow-chart of a manufacturing process of ammunition rounds according to embodiments of the invention;

### DETAILED DESCRIPTION OF THE INVENTION

The invention relates to a system and method enabling the identification, authentication, tracing and the localization of tagged products, in particular ammunition, with high-level security from any distance. The system comprises a reading module, a processing module and a database containing the stored tag identities. The identity of the tag is defined by two distinct signatures: a luminescent spatial pattern and a unique optical spectral signature. The tag contains or forms a spatial pattern, and is composed of luminescent material, i.e. fluorescent particles. By detecting the two signatures with the reading module, the information is processed and the tag identity validated against the information already contained in the database allowing thereby the authentication of the product. This overall procedure enables the identification and authentication of the product. Additionally, the system enables to reveal the accurate position of the tag through a combination of optical measurement and global positioning.

The invention also relates to a method for direct marking of ammunition parts within the production line without impairing the production rate and at low cost. Moreover, the proposed technique enables the manufacturing of tags resistant to the shooting of the cartridge.

### 1. Definitions

The terms below have the following meaning unless indicated otherwise in the specification.

A "tag" is an identity marking having two distinct signatures: a luminescent spatial pattern and a unique optical spectral signature. The tag may be affixed on a variety of products and items that need to be authenticated. Products bearing a tag are referred to as "tagged" or "marked" products

A "spatial pattern" or "luminescent spatial pattern", is a specific one- two- or three-dimensional structure that can be identified and related to a unique serial number. The structure may take any shape and/or form a one- two- or three-dimensional code. For example, it could be composed of multiple layers, offering a three-dimensional spatial extent.

The "spectral signature" refers to the distribution of the fluorescent light emitted by the tag along the wavelength axis. It can be measured with various instruments such as e.g. a spectrometer or a digital camera. When measured with a spectrometer, this signature is referred to as a spectrum or spectra. If recorded by a colour camera, the resulting colour of the image will be defined by said spectral signature.

"Particles" are metallic crystals or powders with a diameter typically comprised in the micrometer, sub-micrometer or nanometer range. When illuminated with excitation light in the wavelength range from 800 to 2000 nm (typically 980 nm) these particles emit light with a specific spectral signature in a range from 450 to 900 nm. Each type of particle is characterized by a specific and unique spectral signature, depending on several parameters such as its chemical composition, size or shape. A mix of several types of particles will have a unique spectral signature, depending on the concentration of each type of particles contained into the mixed solution/powder.

"Luminescent material" is a material that up-converts or down-converts an excitation light, such as luminescent particles embedded or held together in a binder or matrix material, for instance an epoxy or other polymeric material.

An "excitation light" is an electromagnetic energy in a first predefined wavelength or predefined range of wavelengths capable of being upconverted, respectively downconverted by luminescent material to produce light at a second predefined wavelength or predefined range of wavelengths, whereby the excitation light may be out of the visible range, for instance infrared or ultraviolet light, and the produced light in the human eye visible range.

"Identification", "identify" as used herein refers to the step of decoding the first signature of the tag, in particular the spatial pattern, on the basis of a match against the data stored in a database. Each spatial pattern relates to a single serial number.

"Decoding" means reading the serial number coded into the spatial pattern and verifying its integrity. This process is uniquely based onto the spatial pattern signature of the tag. A successful decoding of a tag enables its "identification".

"Authentication", "authenticate" as used herein refers to the step of validating the second signature of the tag, in particular the spectral signature. This step comes after the identification step and thus, proves that a product is genuine.

"Validation", "validate" means analysing the spectral signature of the tag, for instance via the information recorded by both a colour camera and a spectrometer. This process is performed after the decoding process. A successful validation of a tag enables its "authentication".

### 2. Tag

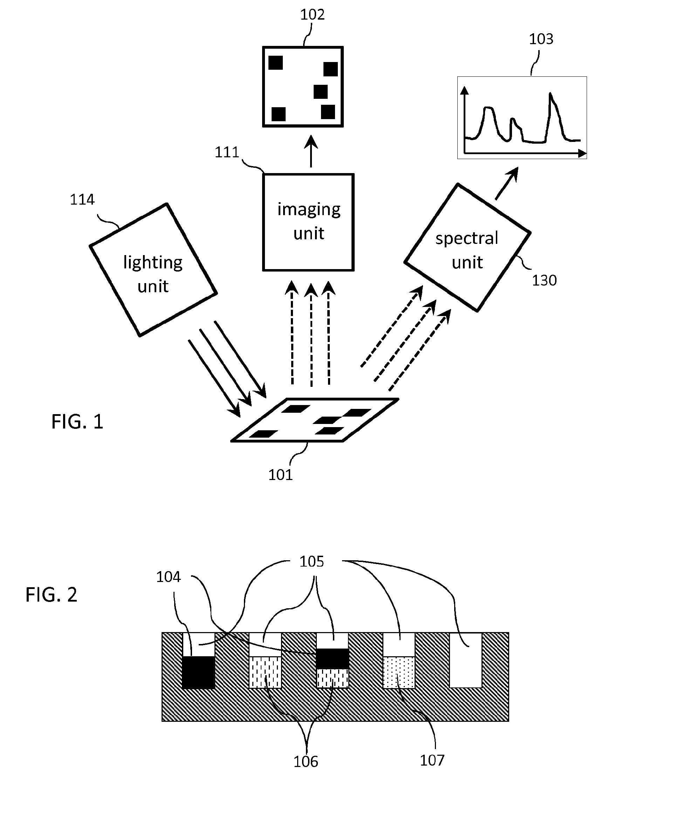

This section describes a tag that can be identified and authenticated with the system according to the invention. The identity of the tag is defined by two distinct signatures: a luminescent spatial pattern and a unique spectral signature specific to the luminescent particles contained into the spatial pattern. The tag contains or forms a spatial pattern representing some type of informatics code. It comprises luminescent material. As illustrated in Figure 1, when excited with infrared (IR) light (800-2000 nm, typically 980 nm) emitted by a lighting unit **114,** the luminescent particles present in the tag **101** emit light at shorter wavelengths (450-900 nm). This so-called optical upconversion is an anti-Stokes fluorescent process and results in a specific spectral signature for the emitted light. The excitation light may also be in the ultraviolet range (280-400 nm, typically 375 nm), which results in the emission of visible light by the luminescent particles due to a downconversion effect. The emitted light is collected by the reader instrument containing the reading module **110** of the system **100** through two distinctive channels: the imaging unit **111** and the spectral unit **112.** The imaging unit **111** records an image (e.g., **102)** of the luminescent spatial pattern when the excitation light is applied, while the spectral unit **111** records its detailed spectral distribution i.e. the spectrum (e.g. **103).** The identity of a tag consists in both the spatial pattern and the spectral signature of luminescent particles embedded in the luminescent material.

The spatial pattern is a one- or multi-dimensional structure created by the characteristic distribution of the luminescent material in the tag. It arises due to the fact that luminescent light is emitted only in the pre-defined areas of the tag **101** containing the luminescent particles while the other areas of the tag remain inactive. In order to create the tag, particles may be introduced into a host material (such as a polymer) prior to its application to another material. The tag may be directly created onto the marked product or can form a full-assembly that is then attached or bonded to the marked product. It can be created onto (or attached to) any type of material.

When the spatial pattern consists of repetitive structures, a large number of codes is created by varying the contrast of each individual structure. Data matrix code made out of square structures is a typical two-dimensional example of such patterns. The number of codes available can be further increased by tuning the spectral signature of the luminescent light emitted by the tag. For example, some structures may contain one type of luminescent particles while some other structures may contain another type of particles, each type of luminescent particles exhibiting a different emission spectrum.

Inorganic particles (e.g. Lanthanide doped fluorides) used in the material forming the tags are supplied in powder form and in order to fabricate the tag, they can be mixed with a polymer (e.g. epoxy) in liquid phase. The luminescent material may thus comprise luminescent particles embedded in a polymeric material that can be easily printed or otherwise deposited on the article to be tagged (marked). The material forming the tag may however be made in other ways and with other materials, per se known, as long as the tag material exhibits luminescent properties when excited with the chosen excitation light as described previously. The luminescent particles may for instance be directly fixed onto the marked product surface, using its surface as a host matrix.

In an embodiment, the spatial pattern may be created by depositing the luminescent material in a plurality of discrete dots or discrete islands. The discrete dots or islands in their simplest form may have a basic shape that is essentially circular, however they may have various other basic shapes, such as elliptical, square, rectangular, polygonal, triangular or any other regular or irregular shape. Discrete dots or islands of luminescent material in different basic shapes may be combined in a tag.

In an embodiment, a series of holes or recesses describing a spatial pattern are created onto the object to mark. A hole or recess may form or encompass a basic shape of the above mentioned dot or island. The holes or recesses forming the spatial pattern can be created directly onto the object by any engraving technique such as laser, etching, mechanical stamping or micro-machining. Then, the luminescent material is deposited into several of these recesses in order to define a specific spatial code identifying the object.

In an embodiment, the article to be tagged may be provided with a standard set of recesses or holes in a pattern that is common to the standard set on other articles, however the luminescent material may be deposited in only a subset of the standard set, or in any combination of recesses less than the complete set of recesses to form various spatial patterns. This allows reducing manufacturing costs associated to the formation of recesses or holes on the surface of the article to be tagged, whereby the printing or deposition of luminescent material in various specific positions can be easily configured.

Thereafter, a protective layer, for instance of a polymer material, may be placed on top of the luminescent material. The remaining holes or recesses that do not contain luminescent particles may also be filled with this protective layer material. The protective layer material can be of various types provided that it is not opaque to the range of wavelengths of the excitation light and the light emitted by the luminescent material, preferred materials including polymer materials.

Figure 2 shows an example of an item directly marked with the proposed techniques, where the luminescent material is directly embedded into holes created in the item. The first hole is filled with a first type of luminescent material **104** (particles embedded in a host matrix) and covered with a protective layer **105.** The second hole is filled with another type of luminescent material **106** and covered with the protective layer **105** while the third hole exemplifies the possibility to fill the hole with two different types of luminescent materials **(104** and **106)** arranged in layers, covered with the protective layer **105.** The fourth hole is filled with a third type of luminescent material **107** while the fifth hole is filled only with the protective layer **105** and contains no luminescent particles.

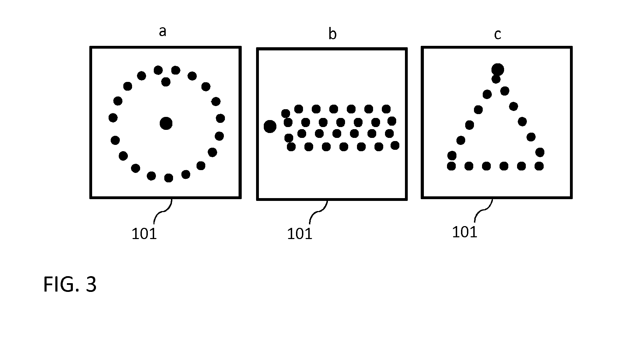

As illustrated in Figure 3, different code designs are represented by different spatial patterns of discrete dots having circular basic shapes, for instance having diameters in the range of 20-300 µm and a total area of about 1-40 mm². The dots may be arranged spatially to form different tag shapes and sizes, depending on the application.

### 3. System and method

This section describes a system **100** able to identify, authenticate and localize a tag. The identification and authentication are achieved by decoding the spatial pattern and validating the spectral signature contained into the tag. The localization of the reader instrument is performed by the use of a global positioning system. In combination with the optical localization provided by the system, the precise position of the tag is identified and recorded into the database **130.**

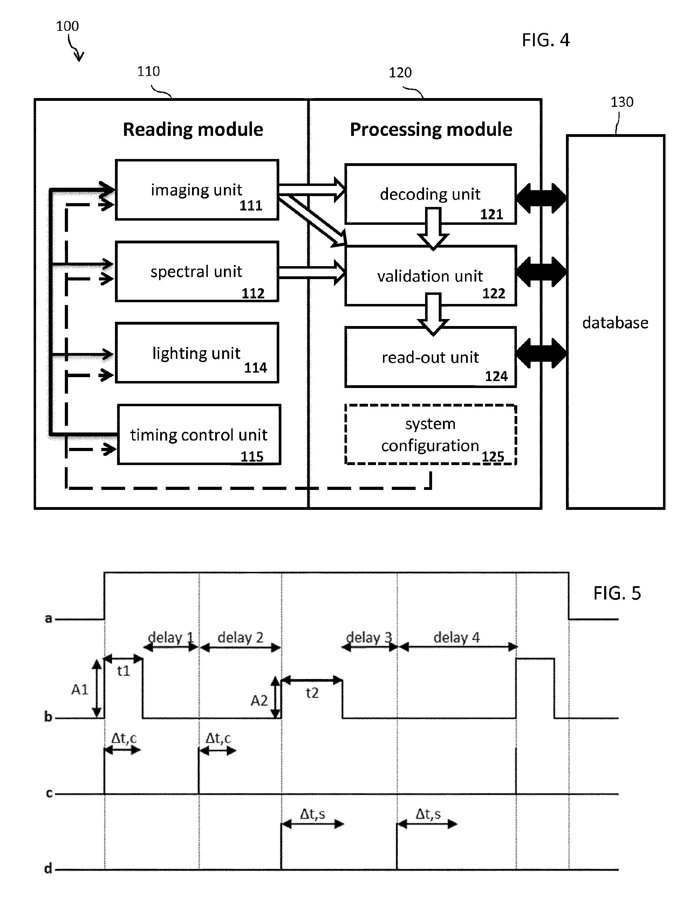

The system **100** comprises a reading module **110** in communication with a processing module **120,** which in turns communicates with the database **130** during decoding and validation processes as well as during the read-out. Figure 4 discloses a block diagram of the whole system and the interactions between the different units.

The system **100** is preferably constructed as part of a hand-held device. However, for applications where it is convenient to scan tags at fixed positions, the system can be designed and operated at a fixed unit. The reader instrument provides a user interface, enabling the user to control and communicate with the system **100.** The reader instrument is driven by a software, embedded into a processing apparatus, such as a computer.

The reading module **110,** may be composed of the following units:

A lighting unit **114** that provides a homogeneous illumination of the tag with at least one light source, at a wavelength corresponding to the excitation wavelength of the luminescent particles contained into the tag, typically in the infrared spectrum when using the upconversion effect. This light source is driven in a pulse-mode, triggered by the timing control unit **115.** To create the illumination pattern, the output of the light source is redirected towards the tag through an optical system (composed of elements such as lenses, mirrors and optical fibres). For safety reasons, a lighting indicator may advantageously be placed externally onto the reader instrument, so as to indicate to the user if the light source emits light or not. Such a lighting indicator may be controlled by the timing control unit **115.** In another embodiment, the lighting unit **114** contains at least one additional light source at any wavelength for the detection of other optical effects than upconversion that may be generated by the tag.

An imaging unit **111** that collects the image emitted by the tag **101** by the use of at least one sensor, such as a colour CMOS or CCD chip. In this unit, an optical filter discards the remaining excitation light. The sensor acquires and sends data to the processing module **121.** The images correspond to visual representations of the spatial pattern.

The imaging unit **111** may record images whilst the excitation light is on or off. The image recorded when the excitation light is on corresponds to the "signal" image whereas the one recorded whilst the excitation light is off is referred to as the "background" image. The background image can be recorded prior or after recording the signal image.

A spectral unit **112** that collects the luminescent light emitted by the tag and redirects it towards a spectrometer, for example by the use of an optical fibre. An optical filter discards the remaining excitation light. The spectrometer may be made out of a diffraction grating, an imaging lens and a CCD line array. In another embodiment, the spectrometer uses other optical components to record the spectrum, such as a prism and/or a CMOS detector. The spectrometer records the spectrum and sends data to the processing module **121.**

The spectral unit **112** may record the spectrum whilst the excitation light is on or off. The spectrum recorded when the excitation light is on corresponds to the "signal" spectrum whereas the one recorded whilst the excitation light is off is referred to as the "background" spectrum. The background spectrum can be recorded prior or after recording the signal spectrum.

As the tag may contain different types of luminescent particles at different locations, the spectral unit **112** may raster scan a small collection area over the tag and acquire each signal sequentially. This enables to authenticate the spectral signature of each dot (or island) independently. The scanning of the collection area over the full field-of-view can be performed by the use of galvo-mirrors. Such a configuration may require the use of several excitation light pulses and synchronous scan of the excitation and collection light beam.

A timing control unit **115** controls the sequence of the reading process. This unit triggers light pulses of the lighting unit **114** and synchronizes the acquisition of the imaging **111** and the spectral units **112.** Each of these two units acquires data sequentially, synchronized on individual light pulses. The reading process can be continuously, automatically or manually enabled. In manual mode, a user operating the system presses on a physical trigger placed onto the reader instrument to enable the reading. While kept pushed, this trigger enables the repetitive output of light pulses, such as illustrated in Figure 5. In Figure 5, from top to bottom, the lines represent (a) the "trigger" (system enabled), (b) the light pulses of the lighting unit **114,** (c) the camera trigger of the imaging unit **111** and (d), the spectrometer trigger of the spectral unit **112 .** A1 and A2 represent the amplitudes of the light pulses (optical power); t1 and t2, the durations of pulse 1 and pulse 2 respectively. Delay 1-4 represent the times after which a trigger pulse is emitted onto the imaging and spectral units in order to start the acquisitions of the signal image/spectrum and background image/spectrum on the respective trigger lines (camera and spectrometer triggers). The integration times of the camera and the spectrometer are represented by Δt,c and Δt,s respectively. The integration time is the period over which the sensor is exposed to light. In this example, the enabling line allows the generation of one full cycle of two pulses and stops after the first light pulse of the second cycle.

The timing control unit **115** emits two trigger events per trigger line. The first line (c), connected to the camera, provides a trigger at the beginning of pulse 1 and after delay 1, while the second line (d), connected to the spectrometer, indicates the beginning of pulse 2 and also the end of delay 3. Each trigger on the camera and the spectrometer lines enables an acquisition of data. The use of sequential pulses, preferably two, for the camera (pulse 1) and the spectrometer (pulse 2) allows setting the amplitude and the duration of each pulse independently. As the imaging unit **111** and the spectral unit **112** have completely different sensitivities, the sequential acquisition allows maximizing the signal-to-noise ratio for each component independently. Another advantage of this synchronization pattern lies in the fact that the processing of the data acquired by the imaging unit **111** on the first pulse, can start while the spectral unit **114** is still acquiring. This enables a faster authentication process. In addition, this synchronization pattern allows background subtraction. Indeed, by recording a background image and a spectrum while the light is off (on the trigger event after delays 1 and 3 respectively), it allows subtracting the background image/spectrum acquired in the "dark" from the signal image/spectrum acquired while the excitation light is on. This procedure drastically enhances the signal of interest as it discards the effect of the parasitic ambient light.

Referring to figure 5, a specific example of a reading process sequence controlled by the timing unit 115 is illustrated. In order to start an acquisition cycle, the user presses for instance a physical trigger placed onto the reader. While kept pushed, this trigger enables the output of laser pulses. The laser driver board contains 2 trigger lines directly connected to the camera and the spectrometer. The synchronization pattern is defined in the configuration file by the use of the following parameters:
- A1 and A2: amplitudes of the laser pulses, defined in terms of the current driving the laser diode, which is proportional to the optical power
- t1 and t2: durations of pulse 1 and pulse 2
- delay1, 2, 3 and 4: after delay 1, the laser board emits a trigger pulse onto the camera trigger line (background acquisition), the 2nd delay allows to set the time before the second pulse and the 3rd delay sets the waiting time before the spectrometer background acquisition. The delay 4 defines the waiting time prior to the next cycle.
- Δt,c and Δt,s represent the integration time of the camera and the spectrometer respectively. The integration time is the period over which the sensor is exposed to light. These two values are logically set equal to t1 and t2.

In this specific example, the laser driver board emits two trigger events per trigger line. The first line, connected to the camera, provides a trigger at the beginning of pulse 1 and after delay1, while the second line, connected to the spectrometer, indicates the beginning of pulse 2 and also the end of delay 3. Each trigger on the camera and the spectrometer lines enables an acquisition of data.

The use of two sequential pulses for the camera and the spectrometer allows setting the amplitude and the duration of each pulse independently. As the camera and the spectrometer may have completely different sensitivities, it enables optimization of the signal-to-noise ratio for each component.

Another advantage of this synchronization pattern lies in the background subtraction. Indeed, by recording data for both the camera and the spectrometer while the laser is off (on the trigger event after delays 1 and 3 respectively), it allows us to calculate a differential image/spectrum where we subtract the background image/spectrum acquired in the "dark" from the signal image/spectrum acquired when the excitation light is on. This procedure drastically enhances the signal of interest as it discards the effect of the parasitic ambient light.

The reader may comprise a status indicator, for instance red and green LEDs. The red LED, for instance placed on top of the reader, indicates to the user when the laser is ON for safety reasons. It is then synchronized with the enable line. The green LED may be turned ON for several seconds after a successful tag authentication. This event may be triggered by software and relayed by the timing control unit to the LED.

The information acquired through the reading module 110 is delivered to the processing module 120 that may be composed of the following units:

A decoding unit 121 that allows identifying the tag using the images (background and signal) sent by the imaging unit 111. The spatial pattern is decoded in order to get the tag serial number. The decoding may be performed by various known methods such as barcode or Quick Response (QR) code reading (see e.g. EP0672994 for QR code decoding). The decoding may also be performed by simple pattern recognition where each tag serial number is uniquely related to a specific pattern. A communication with the database 130 is then established in order to verify the existence of this number in the database 130. If this number already exists in the database 130, the tag 101 is considered as identified.

A validation unit **122** that allows authenticating the tag using the spectra (background and signal) sent by the spectral unit **112.** The spectrum is compared to the predetermined spectra of the "authentic" tags stored in the database **130.** Mathematical criteria are used to perform an accurate comparison and thus conclude whether it is genuine or not.

The validation unit **122** may in addition use the images (background and signal) acquired by the imaging unit **111.** In this case it proceeds to a validation process in two distinctive steps: the analysis of the image colours followed by the above-mentioned analysis of the spectrum. In the first step, the analysis of the image colours after background subtraction consists in decomposing the image of the spatial pattern into three colour channels: red, green and blue. This decomposition may be performed by known techniques such as the one described in US8313030. Indeed, with a colour camera, each pixel of an image is coded over three values corresponding to red, green and blue components of the light. While reading a tag, the intensity ratios between these three components are specific to the type of particles contained into the tag. Thus, it allows rapidly validating or invalidating the tag. In the second step, the spectrum acquired by the spectral unit **112** is compared to the predetermined spectra of the "authentic" tags stored in the database **130.** This second validation procedure offers a greater precision than the first one and is therefore necessary to ensure high security level. However, the calculations required are time-consuming. Hence, this two-step method avoids initiating relatively long computations for a spectrum which obviously does have a correct match in the database **130** as it will be discarded by the first step. Moreover, this approach provides more robustness and security to the authentication.

A read-out unit **124** that discloses information about the tag once authenticated. This unit may be used as an interface by a user to record information about the local position and state of the product into the database **130.** The user may also consult the database **130** to get further information about the product.

A system configuration **125** unit that loads configuration files from the processing module **120** to the reading module **110.** This configuration sets all the parameters that are necessary for the different units of the reading module **110,** such as for example the integration times of the different sensors or the duration and amplitudes of the lighting unit **114** light pulses. These settings are loaded prior to any tag reading.

A database **130** that contains predetermined spatial patterns and spectral signatures enabling the identification and authentication of each tag. It may contain a variety of information about marked products (e.g. description, picture, location), recorded by users. The user may also store current information about the marked products (e.g. location, state of the product). The database can be partly or fully stored into a remote electronic device. It can only be accessed by reader instruments that were formerly authorized.

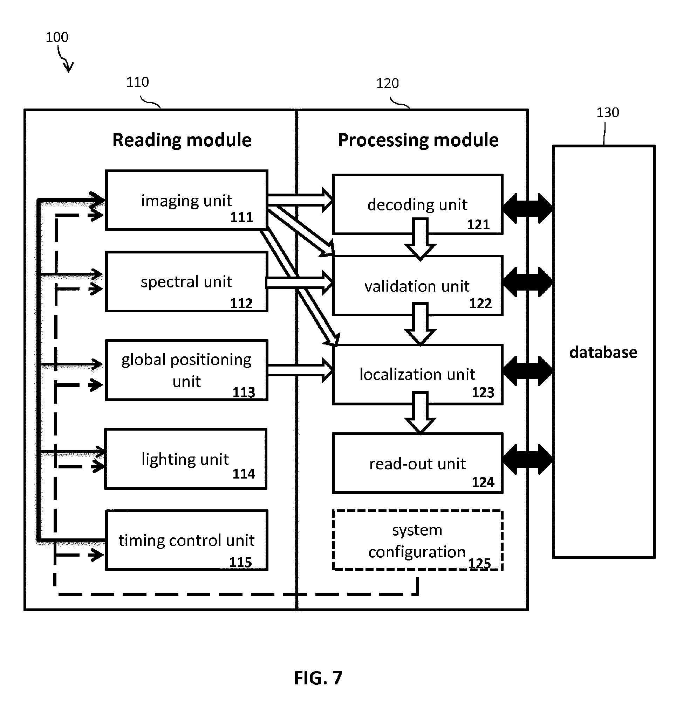

In a preferred embodiment, as illustrated in Figure 7, the system **100** comprises two further units: a global positioning unit **113** in the reading module **110** and a localization unit **123** in the processing module. The global positioning unit **113** communicates with the localization unit **123** and the imaging unit **111** communicates with the decoding unit **121,** validation unit **122** and localization unit **123.**

The global positioning unit **113** gets an access to the local position of the reader instrument (for example by the use of a GPS or A-GPS module) and, depending on the application, it also monitors the direction in which the reader is pointing by the use of an electronic compass and inclinometer. After each successful validation, this information is sent to the processing module.

The localization unit **123** determines the exact global position of the tag. This position is calculated in three steps based on the information sent by the imaging **111** and the global positioning units **113.** First, the distance between the reader instrument and the tag is optically measured based on the imaging unit **111** information. Second, the relative position of the tag in reference to the reader instrument is calculated by using the distance and the direction in which the reader instrument is pointing. Third, the relative position of the tag is added to the global position of the reader. The optical localization allows higher accuracy in determining the position of the tag in comparison to standard methods, such as radio systems. The optical distance measurement can be based on several techniques, depending on the working distance of the reader (distance between the reader and the tag). For distances up to several meters, either the distance is defined by the optical design (with fixed focal lenses) or it is be calculated by measuring the position of an auto-focussing lens. For longer distances, the distance is calculated by measuring the time of flight (time for the light to travel from the reader to the tag and return) or similarly, by phase shift methods. To implement such techniques, the imaging unit **111** may contain an additional dedicated sensor, such as a photodiode. This step may use a different timing scheme with a time modulation of the excitation light intensity.

The identification and authentication of the tag **101** is achieved by decoding and validating the spatial pattern and spectral signature contained into the tag using the system **100.**

The decoding process starts as soon as two images sent by the camera are received. The first image corresponds to the signal and the second one to the background. The decoding may be performed by using only the first image or based on the signal image after background subtraction. The software reads the spatial code out of the image, for instance using a built-in function of a conventional image reader such as found in the Labview™ software (National Instruments Inc.), and returns a number, which is then matched to the database to get the identity of the tag. Prior to the decoding, a pre-validation step (described hereafter) may occur.

If the code identity exists in the database, the validation process starts. This procedure may, in an exemplary embodiment be divided into a number of levels, for instance three levels: the first level deals with the images acquired by the camera, while the last two levels may be based on the spectrum profiles recorded by the spectrometer. Each step is more restrictive than the previous one, thus increasing security.
- Level 1
   o the differential image is decomposed into three colour channels, i.e. red, green, and blue
      ▪ the colour ratios match the database information => PASS
      ▪ the colour ratios do not match the database information => FAILS
- Level 2
   ∘ peak wavelength recognition from the differential spectrum profile
      ▪ peak positions match the database information => PASS
      ▪ peak positions do not match the database information => FAILS
- Level 3
   o calculation of the intensity ratios between several specific peaks
      ▪ the ratios match the database information => PASS
      ▪ the ratios do not match the database information => FAILS

In order to be authenticated, in the above example a tag needs to pass these three levels of validation process carried out by the reader software.

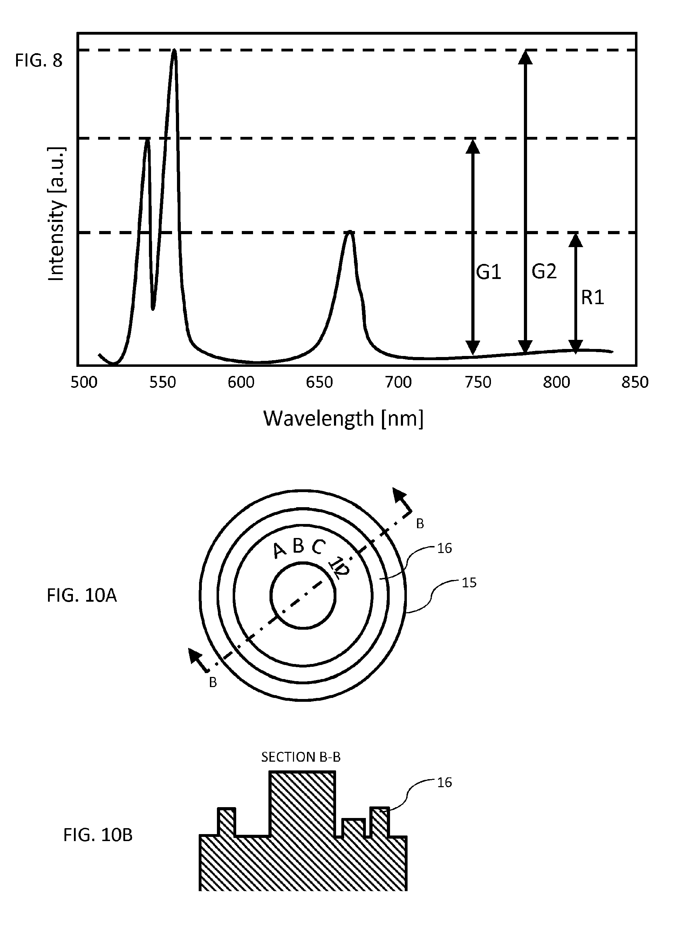

Level 1 of the validation process carried out by the reader software enables the system to determine whether the luminescent material is a specific selected luminescent material and thus authentic, or not. If it would be any standard luminescent material, it would shine over a broad spectrum, while specific selected luminescent particles may only generate defined peaks in specific bands, for instance in a green band (around 550 nm) and in a red band (around 670 nm) of the visible spectrum, as illustrated in Figure 8. The specific selected material has a readable spectrum signature that differentiates it from other luminescent materials that possess another spectrum signature. In this example, the intensity in the green channel is greater than in the red channel, while the blue intensity is close to zero. This first level of validation confers an enhanced security to the method without slowing down the process. Indeed, it may start before completing the acquisition of the spectral data by the spectral unit **112** as it relies only on the information gathered by the imaging unit **111.** In the case if the tag contains different types of luminescent particles, this first level of validation enables to quickly analyse the spectral components of each dot in a single synchronous acquisition. This also enables to locate the structures containing different particles and define their position for the spectral unit to acquire their spectra (with a galvo-mirror scanner if necessary).

During the level 2 of the validation process carried out by the reader software, the precise positions of the peak intensities along the wavelength axis are detected, which confers a high accuracy to the authentication process.

During level 3 of the validation process carried out by the reader software, the ratios between different peak intensities are computed, such as G1/R1 and G1/G2 in the particular example shown in Figure 8. These values allow to accurately characterising the spectrum signature of the luminescent material used in the tag. The computation of the different ratios between the peak values may also be performed by other means of calculation, such as a correlation with a spectrum profile contained into the database. The correlation is a very sensitive way of determining whether two curves present similar shapes or not.

In a variant, it is possible to add another level to the validation process by measuring the fluorescence lifetime of the particles. This parameter enables to further differentiate specific selected luminescent particles from other luminescent materials. The fluorescence lifetime corresponds to the average duration during which luminescent molecules remain excited before releasing their energy by emitting light. In order to measure such delays, an additional photodiode may be placed into the reader.

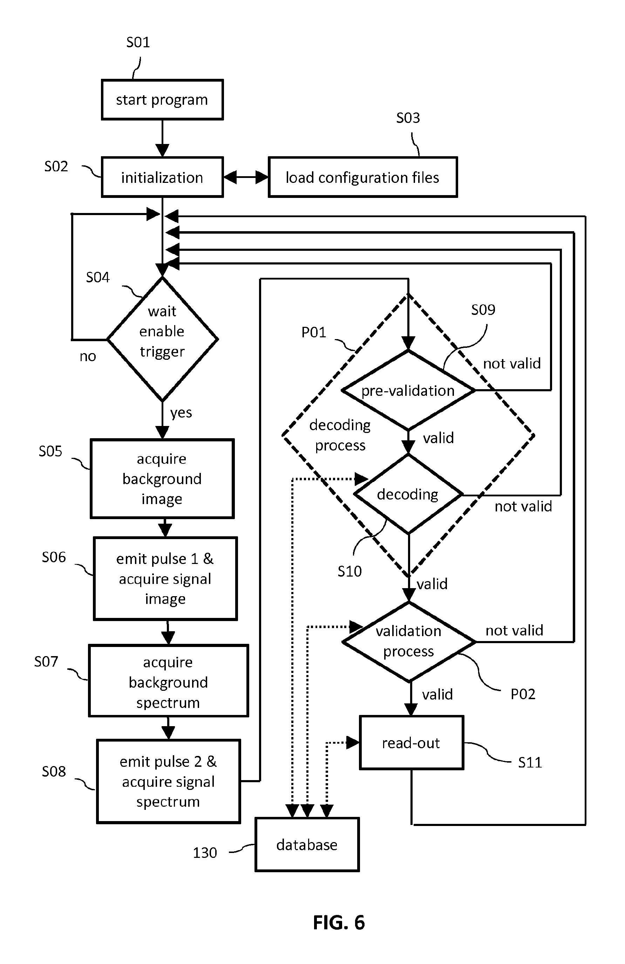

Figure 6 shows a flow-chart representing the steps **(S)** and processes **(P)** of an embodiment of a method to identify and authenticate a tag **101** as shown in Figure 1 that can be performed by various units of the system **100** described above. Once the program starts **S01,** the configuration files are loaded **S03** and the program initialises **S02** the reading process by the reading module **110.** This process may start upon triggering **S04.** Upon triggering, the timing control unit **115** controls the sequence of the reading process and in turn triggers light pulses from the lighting unit **114** and synchronizes the acquisition of the imaging unit **111** and spectral unit **112.** In step **S05,** the imaging unit **111** acquires a background image followed in step **S06** by the acquisition of a signal image synchronised onto the emission of a first light pulse by the lighting unit **114.** Next, the spectral unit **112** acquires a background spectrum **S07** and acquires a signal spectrum **S08** synchronised onto the emission of a second light pulse by the lighting unit **114.**

The information recorded by the reading module units is delivered to the processing module **120.** Then, the decoding process **P01** takes place, meaning that the decoding unit **121** first identifies the tag by retrieving the tag serial number from the database **130.** This decoding is based on the images of the spatial pattern recorded by the imaging unit **111.**

Prior to the proper decoding step **S10,** the decoding unit **121** may perform a pre-validation step **S09** in order to ensure that the tag contains luminescent particles excitable by the lighting unit **114.** This pre-validation step **S09,** which could be optional, consists in subtracting the background image to the signal image. If the resulting image reveals the optically activated spatial pattern, the pre-validation **S09** is successful and the decoding **S10** starts.

After a successful identification of the tag by the decoding process, the validation process **P02** takes place. The validation unit **122** validates the tag by comparing the spectrum acquired by the spectral unit **112,** to predetermined spectra of the "authentic" tags stored in the database **130.** The validation unit may in addition use the data acquired by the imaging unit **111.** In this case it proceeds to a validation process in two distinctive steps: the analysis of the image colours followed by the analysis of the spectrum as detailed above in the paragraph describing the validation **122** unit.

Finally, the read-out step **S11,** performed by the read-out unit **124,** discloses information about the tag once authenticated.

In another embodiment, process **P01** is performed in parallel to steps **S07** and **S08** in order to speed up the full procedure. Only the use of sequential individual excitation light pulses for the imaging and the spectral unit allows implementing this parallel workflow. Moreover, the first level of the validation process **P02** can also be performed while still acquiring the spectral data **(S07** and **S08).** Thus, the use of the information recorded by the imaging unit for the validation process as well allows a faster rejection of non-genuine tags as the steps **S07** and **S08** do not need to be completed prior the level 1 of the validation process **P02.**

As mentioned above, a further validation step may be added to further increase the security level of the authentication. This step measures the fluorescence lifetime of the particles contained into the tag either by the use of the information recorded by the imaging unit **111,** possibly by the use of an additional dedicated sensor, such as a photodiode. This step may use a different timing scheme with a time modulation of the excitation light intensity. Again, the measured values are compared to the corresponding information recorded into the database.

A person skilled in the art will appreciate that the system design described here may vary but still remain in the scope of the current invention. For example, we propose to use independent optical paths for each unit of the reading module 110. It is also possible to share some optical components for different units, such as lenses for the lighting unit **114** and the spectral units **112.** In that case, the separation between the two paths could be performed by the use a dichroic mirror. Moreover, in special cases where the light emitted by the tag would be weak or for long-distance detection, dedicated schemes for low signal amplification may be implemented.

### 4. Ammunition marking

This section describes a method for manufacturing the above described tag **101** embedded into a cartridge to provide enhanced security and allow the traceability of cartridges. This solution permanently serializes manufactured rounds with information including manufacture location, year, LOT number and importantly a unique serial number per round. In addition to serialization of rounds, the tag **101** incorporates a range of security features including non-forgeable spectral properties and a proprietary encoding method. Along with the tagging method, a dedicated reading system as described above is provided to authenticate the marked rounds. This reading system can communicate with a database as previously described.

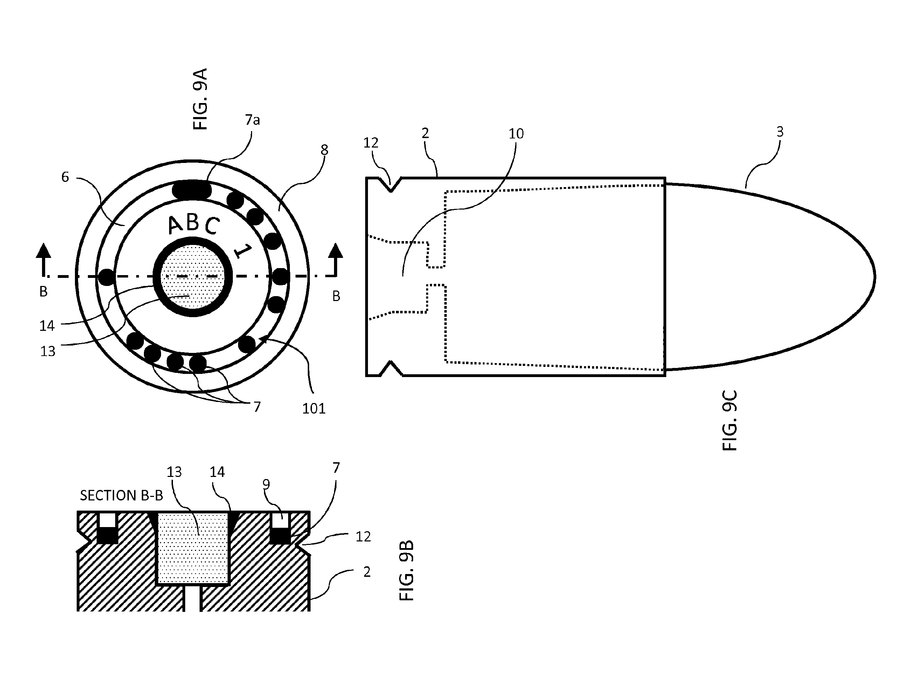

Figure 9 illustrates a round assembly with a marking on the case base wall that can be identified and authenticated with the system according to the invention. As detailed above, the identity of the tag is provided by both a spatial pattern and the spectral signature of the luminescent material **7, 7a** of the tag. When excited with light at the predefined wavelength, the luminescent material emits light in the visible range. The specific spectral profile of the emission can be precisely authenticated and thus, offers enhanced security.

In an embodiment, the tag **101** comprises a plurality of dots of luminescent material **7, 7a** forming a spatial pattern positioned on a base wall **8** of a case of a round. The round may be for firearm or for a canon or any other projectile system based on a cartridge containing a combustible material and a projectile **3** closing off an open end of the cartridge. As is well known in the art, and depending on the design of the ammunition, the base wall of the cartridge **2** may comprise a central recess **10** to receive sealing varnish **14** and a primer or detonator **13** that is configured to be hit by a firing pin of a weapon. The case **2** may further comprise a circumferential groove **12** adjacent to the base wall. Such circumferential grooves are found in many conventional types of ammunition and may serve to provide a shoulder for a catch configured to eject the cartridge after firing. Except for the adaptations to the ammunition to incorporate a tag according to this invention, other aspects of the design of such rounds of ammunition are per se well known in the art and need not to be described in further detail herein.

In a preferred embodiment, the base wall **8** of the case **2** of the ammunition round, comprises a groove **6** formed in the base wall, and dots of luminescent material **7, 7a** forming the tag **101** are positioned within the groove. The dots may for instance have a diameter in the range of 20-300 µm. The groove for the tag may advantageously be in the form of a circular groove, preferably positioned adjacent or close to the periphery of the base wall as illustrated in Figure 9, although the groove **6** may also be positioned distant from the outer edge, closer to the centre. This arrangement is particularly advantageous because the tag is well protected from frictional wear and thermal and mechanical dilatation effects to which the case is subjected during firing and then ejection. Moreover, the groove in the base wall can be easily produced in a cartridge manufacturing line in a stamping operation. Since base walls of conventional rounds are typically subjected to a stamping operation, the inclusion of an additional stamping of the groove in a standard process can be performed at no or very little additional cost. The circular arrangement close to the periphery of the round allows, especially for small calibre ammunition, to present a relatively large sized tag that is easy to manufacture, and easy to locate and to read.

Although the circular groove presents a particularly simple and low cost solution, within the scope of the invention, it is also possible to stamp in the base wall **8** a plurality of discrete recesses instead of or in addition to a groove for receiving dots of the luminescent material.

In variants, it is also possible to use the conventional indents, such as the stamped indented words and letters found on the base wall (i.e. "ABC 12" in figure 9) of a conventional round, to deposit luminescent material in portions of the indents, or as dots in portions of the indents, or completely filling one or a plurality or all indents with luminescent material. Luminescent material positioned in the conventional indents may be used as an alternative or in addition to the variants mentioned above.

In yet another variant, luminescent material can be deposited in the peripheral groove **12,** as an alternative or in addition to the above mentioned variants. The luminescent material may be deposited in discrete dots within the peripheral groove, whereby the groove provides a protection against frictional wear and in view of its position near the base, some protection against thermal and mechanical dilatation effects to which the case is subjected during firing and then ejection.

The tag **101** may, in certain embodiments, comprise an orientation mark or pattern that allows the spatial arrangement of luminescent material to be positively oriented so that an identification code defined by the spatial pattern of the tag can be unambiguously read and identified. This orientation mark or pattern can be provided by a single discrete dot or island of luminescent material with a different shape and/or size than other dots of the tag, or by a plurality of dots or islands of luminescent material forming globally a specific shape and/or pattern not repeated elsewhere in the tag and/or by a dot composed of different type of luminescent material. In the example of figure 9, the orientation mark is formed by an oblong dot **7a** whereas the other dots forming the tag are essentially circular. In the examples of figure 3, the orientation mark may be formed by a dot with a larger diameter than the other dots forming the tag.

In embodiments of the invention, a base surface of a projectile may also comprise a tag such that a fired projectile may also be identified, or this may also be used to determine if a cartridge case has already been used and comprises a new non-authentic projectile.

In an embodiment of the invention, the luminescent material dots define a binary code, interpretable by the reading system. The dots of the tag thus define a specific pattern that can form a unique code.

In a variant, the code may comprise a plurality of values greater than binary values. By the use of different luminescent materials emitting different spectra to form different dots, each dot may represent more than two possible values, the number of values depending on the number of different identifiable spectra that are represented. Different luminescent materials may be produced by using different luminescent particles, or by different mixes of different luminescent particles. The density of luminescent particles in a luminescent material may also be varied, in order to vary the read-out intensity, which may provide a supplementary value for the code.

In an advantageous embodiment, a transparent protective layer of pure polymer is placed on top of the code, as depicted in figures 2 and 9, where dots are presented as independent microstructures.

The polymers used to generate the tag may be of various types and may be chosen among known polymers based on their properties, such as thermal properties, hardness and strength of bond with metal.

In a variant, the luminescent particles may for instance be directly fixed onto the marked product surface, using its surface as a host matrix.

An additional optional feature in an embodiment of the tag may be included to enable detecting if the case has been reloaded and re-primed after firing. During the manufacturing process, the primer is sealed with a polymer varnish **14,** which protects the explosive powder from the outer environment. For reloading a cartridge, the primer and the varnish typically need to be removed and replaced. In order to authenticate whether the varnish is genuine, some luminescent material may be incorporated into the varnish. If the reader is unable to detect the specific fluorescent signal emitted by the seal, it is possible to conclude that the case has been reloaded.

Another way of indicating a possible former use of the cartridge case consists in embedding a sacrificial dot of luminescent material forming part of the tag, on or close to the primer, for instance on the seal. The sacrificial dot may alternatively or in addition be made out of a material designed not to sustain the temperature of the case during the firing. Indeed, if the sacrificial dot melts or burns during firing, its absence would indicate a former use of the case.

Regarding manufacturing of the ammunition, it may be noted that main components of a cartridge are generally produced separately and assembled together during the charging process. In order to avoid slowing down the production rate, the cartridge case may be tagged right before charging it, as there is an interruption in the production line since the cases need to be brought from the case production line to the charging area.

Typically, the stamp operation imprints lettering and designs onto ammunition cases. It uses a mechanical punch with an alphanumeric code and design. This punch imprints the code on the base wall of each ammunition case. To generate a groove onto the case, a structure **16** may be added onto the head-stamp **15** as illustrated in figure 10. This is a very cost effective manner to produce the recess for the tag, however other methods such as laser engraving, micro-machining or etching may also be utilised to generate the groove.

The dots of luminescent material can be deposited either by the use of modified dedicated dispensers such as ink-jet type of dispensers, per se known in the field of printing technology, or by lithography (selective removal of photoresist). Both these techniques allow controlling the size and the position of the dots very accurately. The advantage of the special dispensers is the speed. Indeed, this process is very fast and allows a precise control of the size and the position of the drop. The protective layer fills then the rest of the groove as a seal.

Prior to packaging the rounds, each tag identity would be read and registered into the inventory management system. This procedure can be easily implemented in the production line by the use of serialised readers **110** placed over a conveying tray.

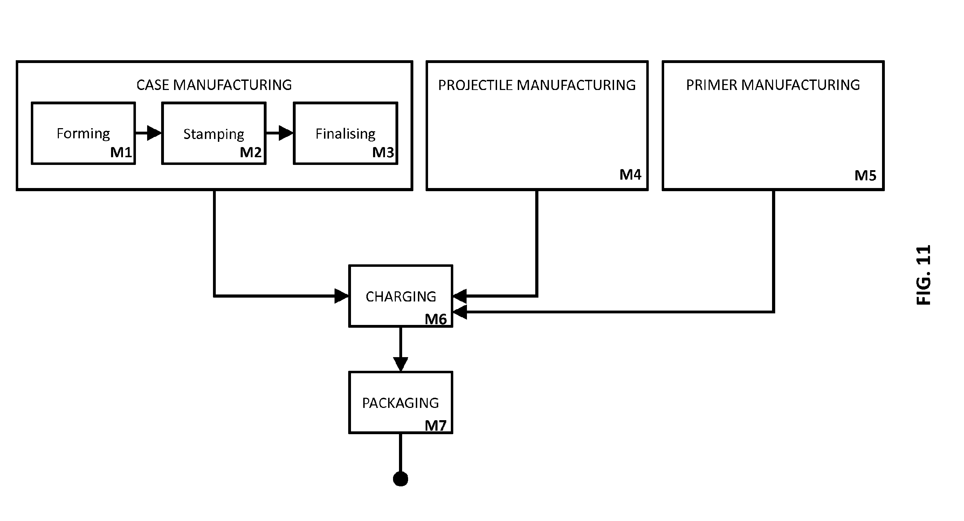

As explained above, the recesses or groove **6** can be created during a conventional stamping step **M2** and thus does not affect the existing manufacturing process as illustrated in figure 11. In the case if the groove would be produced by the use of other techniques such as laser engraving, micro-machining or etching, this step could be performed after the stamping step or during the case finishing step **M3.** Even if this would add a step in the manufacturing procedure, laser engraving is fast enough not to slow down the production rate.

The tagging of the case with luminescent material and the addition of the protective layer represent the main modification of the production line as it adds a process, which can be performed at various steps subsequent to the groove forming step **M2,** for instance during the case finishing step **M3.** However, by the use of advanced deposition techniques such as dedicated dispensers (explained above), one can ensure a high production rate. For the same reason, if UV-curing polymers are used, the curing could be performed while the cases are being conveyed form the "tagging station" to the assembling area, for instance during or between the case finishing step **M3** and charging and assembly step **M6.** During the assembly step **M6** the case is loaded with combustible material and assembled to the projectile and primer made in separate steps **M4, M5** parallel to the case manufacturing steps **M1-M3.** The finished rounds are then packaged (step **M7).** Inspection and code reading of the rounds may be performed after the assembly step **M6** and before the packaging step **M7.**

In conclusion, the tag according to embodiments of the invention presents numerous advantages over the classical ammunition marking based on stamping:
- It can uniquely mark ammunition cases with an identification number.
- Its identity may be encrypted and secured into protected databases.
- It embeds security features into each marked round (specific emission spectrum)

In addition, embodiment of the invention can be easily implemented in a classical production chain of ammunition, inter alia for the following reasons:
- The code may be provided in a circular shape to be compatible with cartridge shape.
- The tag is machine-readable and thus benefits from barcode system technology
- The tag does not affect the performance of the cartridge thanks to its location on or near the base wall.
- The location of the tag on the base wall of the case is of particular importance because:
   o It avoids friction against mechanical elements during the firing.
   o The metal is thicker at this location and thus undergoes limited temperature rise during firing in comparison to other areas.
   o This location is also less affected by high pressure during firing than the rest of the case.
   o It is the only location that allows reading the tag before/after firing as it gets less distorted than the rest of the case and does not accumulate powder residues
- The burying of the tag into a groove offers protection against scratching and tampering
- The transparent protective layer offers protection against cleaning solvents and scratching
- The marking meets all the requirements in terms of resistance to temperature, waterproofing and sustainability over time (including the rise of temperature and mechanical constraints occurring during the firing).
- The integration and verification of each serial number into the database can be easily implemented at the end of the production chain (prior to the packaging)
- The tag manufacturing integrates seamlessly into the manufacturing process with the ability to rapidly switch-in / switch-out marking process. This allows for manufacturing of special LOTS on demand.
- The tag manufacturing is rapidly performed, requires minor modifications of current processes and does not impair the production rate of conventional manufacturing
   o possible use of the existing stamping procedure
- Several techniques exist for efficient deposition of dots (ink-jet dispensers, lithography)
- The marking may be carried out on cases prior to charging (no safety issue).
- The marking process complies with the current production rate

Advantageously, the invention described above provides an efficient way of authenticating a cartridge case and real added value for the manufacturer. A tag according to embodiments of the invention can fulfil the following requirements:
- Not impair the performance of the ammunition.
- Be readable before and after firing (resist to temperature rise).
- Encode information about the manufacture location, the LOT number, the year and possibly, a unique cartridge serial number.
- Can be stored for 10 years in a sealed package at 80% relative humidity and temperature up to 50°C.
- Be operational in temperatures between -54 °C and +100°C.
- Be water resistant

## Claims

1. Ammunition round comprising a case (2) and identification information on said case, wherein said identification information includes a tag (101) comprising a luminescent material (7, 7a) positioned on a base wall (8) of said case (2), the luminescent material comprising luminescent particles that up-converts or down-converts an excitation light, configured to produce a spectral signature allowing authentication of the tag.

2. Ammunition round according to claim 1 comprising a projectile (3) and identification information on said projectile, wherein said identification information includes a tag (101) comprising a luminescent material (7, 7a) positioned on a base surface of said projectile (3), the luminescent material comprising luminescent particles that up-converts or down-converts an excitation light, configured to produce a spectral signature allowing authentication of the tag.

3. Ammunition round according to any preceding claim wherein the tag comprises a plurality of dots of luminescent material forming a spatial pattern defining at least in part an identification code.

4. Ammunition round according to any preceding claim wherein the luminescent material comprises luminescent particles embedded or held together in a binder or matrix material.

5. Ammunition round according to the preceding claim wherein said binder or matrix material comprises a polymer.

6. Ammunition round according to either of the two preceding claims wherein the luminescent particles are up-converting particles.

7. Ammunition round according to any of the preceding claims wherein the excitation light is in the infrared range.

8. Ammunition round according to any of the preceding claims comprising a projectile closing off an open end of the case, a combustible material contained in the case, and a primer or detonator (13) mounted at a centre portion of the base wall that is configured to be hit by a firing pin of a weapon.

9. Ammunition round according to any preceding claim wherein the luminescent material is mounted in a recess or plurality of recesses in the case base wall.

10. Ammunition round according to the preceding claim wherein the recess or recesses comprise a groove (6) formed in the case base wall, and dots of luminescent material (7, 7a) forming the tag are positioned within the groove.

11. Ammunition round according to the preceding claim wherein the groove is a continuous groove.

12. Ammunition round according to the preceding claim wherein the continuous groove is circular.

13. Ammunition round according to any of the four preceding claims wherein said recess or recesses are positioned adjacent a periphery of the case base wall.

14. Ammunition round according to any of the five preceding claims wherein said recess or recesses are formed in a stamping operation of said base wall.

15. Ammunition round according to any of the preceding claims wherein said tag comprises an orientation mark or pattern that allows a spatial arrangement of luminescent material to be oriented so that an identification code defined by the spatial pattern of the tag can be unambiguously read and identified.

16. Ammunition round according to any of the preceding claims wherein, the luminescent material dots define a binary code.

17. Ammunition round according to any of the preceding claims 1-14 wherein the luminescent material dots define a code comprising a plurality of values greater than binary values, by the use of different luminescent materials emitting different spectra.

18. Ammunition round according to any of the preceding claims further comprising a transparent protective layer placed on top of the luminescent material.

19. Ammunition round according to the preceding claim wherein transparent protective layer comprises a polymer, for instance a photoresist polymer cured by heat, or ultraviolet light exposition, or both.

20. Ammunition round according to any of the preceding claims further comprising a light luminescent material incorporated in a varnish layer on the base wall or in the varnish composing the primer seal, or in a sacrificial dot forming part of the tag on or close to a primer of the ammunition round, configured to detect that the case has been used and reloaded.

21. Ammunition round according to any of the preceding claims in which the luminescent particles are directly fixed onto the base wall without the use of binder, wherein the surface of the base wall acts as a host matrix.

22. Method of manufacturing an ammunition round according to any of the preceding claims, comprising stamping a recess or recesses in the base wall during a base wall stamping operation (M2) and depositing dots of luminescent material in said recess or recesses.

23. Method of manufacturing an ammunition round according to any of the preceding claims, comprising creating a recess or recesses in the base wall with methods such as laser engraving, micro-machining or etching and depositing dots of luminescent material in said recess or recesses.

24. Method of manufacturing according to the preceding claim, wherein the dots of luminescent material are deposited using a printing dispenser.

25. Method of manufacturing according to either of the two preceding claims, wherein prior to packaging the ammunition rounds, each tag is identified by a reader (110) and registered in an inventory management system.

26. A system (100) for identifying and authenticating a tag (101) applied to an ammunition round, wherein the tag (101) is defined by at least one luminescent spatial pattern and one spectral signature of luminescent particles contained in said tag (101) and defining said spatial pattern, the system comprising:
▪ a reading module (110) to acquire the tag information, said reading module (110) comprising: a lighting unit (114) comprising a light source operated in a pulse-mode, said light source being adapted to illuminate the tag with excitation light so as to excite the particles of the tag (101), thus resulting in the emission of the luminescent spatial pattern by the tag (101); an imaging unit (111) adapted to record an image of said spatial pattern; a spectral unit (112) adapted to record the spectrum of said spectral signature; a timing control unit (115) adapted to synchronize the actions of the other units of the reading module (110);
▪ a processing module (120) both in communication with the reading module (110) and with a database (130) containing the spatial patterns and spectral signatures of predetermined tags, said processing module (120) comprising: a decoding unit (121) adapted to decode the image recorded by the imaging unit (111), provide a serial number corresponding to said image and compare said identification number with the corresponding identification numbers of the predetermined tags so as to identify the tag (101); a validation unit (122) adapted to compare the spectrum recorded by the spectral unit (112) with the spectra of the predetermined tags so as to authenticate the tag (101);

27. The system (100) according to the preceding claim, wherein the imaging unit (111) and the spectral unit (112) record their respective data in a sequential manner, their acquisition being synchronized with different excitation light pulses.

28. The system (100) according to any of the preceding claims, wherein a first and a second excitation light pulses are used.

29. The system (100) according to any of the preceding claims, wherein the acquisition of the imaging unit (111) is synchronized with the first excitation light pulse and the acquisition of the spectral unit (112) is synchronized with the second pulse.

30. The system (100) according to any of the preceding claims, wherein the imaging unit (111) records a signal image and a background image and the spectral unit (112) records a signal spectrum and background spectrum.

31. The system (100) according to the preceding claim, wherein the decoding unit performs the identification of the tag using the image resulting from the subtraction of the background image from the signal image and the spectral unit performs the validation of the tag using the spectrum resulting from the subtraction of the background spectrum from the signal spectrum.

32. The system (100) according to any of the preceding claims, further comprising a global positioning unit (113) and a localization unit (123).

33. A method for identifying and authenticating a tag (101) applied to an ammunition round, wherein the tag (101) is defined by at least one luminescent spatial pattern and one spectral signature of luminescent particles contained in said tag (101) and defining said spatial pattern, comprising the steps of : illuminating the tag (101) with excitation light emitted by a light source operated in a pulse-mode so as to excite the particles of the tag (101), thus resulting in the emission of the luminescent spatial pattern by the tag (101); recording with an imaging unit (111) of an image of said spatial pattern; recording with a spectral unit (112) of a spectrum of said spectral signature; decoding with a decoding unit (121) of said image so as to identify the tag (101) (101); validating with a validation unit (122) of said spectrum so as to authenticate the tag (101).

34. The method according to the preceding claim, wherein the imaging unit (111) and the spectral unit (112) record their respective data in a sequential manner, their acquisition being synchronized with different excitation light pulses.

35. The method according to any one of the two preceding claims, wherein a first and a second excitation light pulses are used.

36. The method according to any one of the three preceding claims, wherein the acquisition of the imaging unit (111) is synchronized with the first excitation light pulse and the acquisition of the spectral unit (112) is synchronized with the second excitation light pulse.

37. The method according to one of the four preceding claims, wherein the imaging unit (111) records a signal image and a background image and the spectral unit (112) records a signal spectrum and background spectrum.

38. The method according to the preceding claim, wherein the decoding unit performs the identification of the tag using the image resulting from the subtraction of the background image from the signal image and the spectral unit performs the validation of the tag using the spectrum resulting from the subtraction of the background spectrum from the signal spectrum.

39. The method according to any of the six preceding claims, further comprising a step of determining the exact position of the tag.

40. A method for identifying and authenticating a tag (101) applied to an ammunition round, wherein the tag (101) is defined by at least one luminescent spatial pattern and one spectral signature of luminescent particles contained in said tag (101) and defining said spatial pattern, comprising the steps of: illuminating the tag (101) with an infrared excitation light emitted by a light source driven in a pulse-mode so as to excite the particles of the tag (101), thus resulting in the emission of the luminescent spatial pattern by the tag (101); recording with an imaging unit (111) a signal image and a background image of said spatial pattern; subtracting the background image from the signal image so as to determine an image of said spatial pattern; recording with a spectral unit (112) a signal spectrum and a background spectrum, of said spectral signature; subtracting the background spectrum from the signal spectrum so as to determine a spectrum of said spectral signature; decoding with a decoding unit (121) said images, so as to identify the tag (101), and validating with a validation unit (122) said image and the spectrum, by decomposing said image into different colour components and comparing the intensity ratios between said colour components with information stored in a database (130), and comparing said spectrum of said spectral signature to the spectra stored in the database.

41. The method according to the preceding claim, wherein the decoding unit (121) performs a pre-validation step consisting in checking the presence of the spatial pattern on the image resulting from the subtraction of the background image from the signal image.

42. The method according to any one of two preceding claims, wherein the validation unit (122) performs a further step of calculating the fluorescence lifetime of the particles.
